# EUROPEAN PATENT SPECIFICATION

(11) **EP 2 433 999 B1**
(45) Date of publication and mention of the grant of the patent: **20.11.2013**
(21) Application number: 10777378.0
(22) Date of filing: 20.05.2010
(51) Int. Cl.: C09K 8/80, E21B 43/267

(54) **FILM COATED PARTICLES FOR OIL EXPLOITATION AND OIL EXPLOITATION METHOD USING THE SAME**
FILMBESCHICHTETE PARTIKEL ZUR ÖLFÖRDERUNG UND ÖLFÖRDERUNGSVERFAHREN DAMIT
PARTICULES ENROBÉES D'UN FILM POUR L'EXPLOITATION PÉTROLIÈRE ET PROCÉDÉ D'EXPLOITATION PÉTROLIÈRE UTILISANT CELLES-CI

(30) Priority: 21.05.2009 CN 200910203464
(43) Date of publication of application: 28.03.2012
(73) Proprietor: Beijing Rechsand Science & Technology Group Co., Ltd, Beijing 100085 (CN)
(72) Inventor: QIN, Shengyi, Beijing 100085 (CN)
(74) Representative: Nederlandsch Octrooibureau
(86) International application number: PCT/CN2010/073013
(87) International publication number: WO 2010/133175

(56) References cited:
- CN-A- 1 366 127
- CN-A- 1 640 981
- CN-A- 1 984 769
- CN-A- 101 531 893
- CN-A- 101 580 707
- CN-A- 101 586 024
- CN-A- 101 666 225
- CN-A- 101 767 948
- US-A1- 2002 048 676
- US-A1- 2005 194 135
- US-A1- 2007 054 121
- DATABASE WPI Week 200582 Thomson Scientific, London, GB; AN 2005-798339 XP002683743, & CN 1 640 981 A (RENCHUAN MFG TECHNOLOGY INST BEIJING) 20 July 2005 (2005-07-20) & CN 1 329 420 C (RENCHUAN MFG TECHNOLOGY INST B [CN]) 1 August 2007 (2007-08-01)

## Description

### Field of the Invention

The present invention relates to the technical field of oil recovery, in particular to coated particles for oil recovery and application of the coated particles in oil recovery.

### Background of the Invention

As the national economy in China develops rapidly, the amount of petroleum consumption increases year by year. On one hand, the petroleum resources are extremely short; on the other hand, the oil recovery ratio is not high, and severe waste exists in the exploitation. Now, the oil fields have been in a high water-cut production stage, and the water content is high, and increases quickly. At the end of 2000, the overall water content in the oil fields was as high as 87%, and the water content in the major oil reservoirs exploited in the basic well pattern was 90~95%; and the production cost increases yearly.

The fracturing technology is a main measure for increasing the well yield. The fracturing technology including pushing a large volume of viscous liquid at a high pressure into the oil reservoir with a fracturing unit, and, after a large quantity of fractures occur in the oil reservoir, filling a fracturing propping agent into the fractures, to increase the permeability of the oil reservoir, so as to increase the oil yield. However, in the high water-cut production stage, the fracturing measure may result in water flooding. In addition, as a large volume of water is filled, the water will rush up through the high permeability zone (similar to bottom water coning), and the water content increases quickly after fracturing; in addition, as the volume of produced liquid increases sharply and the water content increases after fracturing, the production cost increases severely. Therefore, for a specific oil reservoir, the recovery benefit can't be increased merely with the fracturing technology.

Presently, coated quartz sand is used in the industry as fracturing propping agent to improve formation porosity and pore connectivity. However, when the common coated quartz sand is used as fracturing propping agent, both oil and water can permeate in a large amount; as a result, the yield of crude oil and the efficiency of crude oil production are severely decreased, and some other side effects occur.

### Brief Description of the Drawings

Figure 1 is a diagram that shows the relation among volume of liquid produced, volume of oil produced, and volume of water produced in an underground test, in which the fracturing propping agent disclosed in the present invention is used.
Figure 2 shows a curve of fluid conductivity of the fracturing propping agent disclosed in the present invention vs. pressure.

### Description of the Invention

The object of the present invention is to provide coated particles for oil recovery and an oil recovery method using the coated particles, so as to solve the problem of low yield of crude oil because both oil and water can permeate when coated quartz sand is used as the fracturing propping agent in the prior art.

To attain the object described above, the present invention provides a coated particle for oil recovery, comprising particle of aggregate, and an oil-permeable and water-proof film coated on the particle of aggregate.

The particles of aggregates may be any rigid and water-insoluble particles, and are preferably quartz sand particles or ceramic particles.

The oil-permeable and water-proof film may be formed from one or more of oleophylic and hydrophobic resin, silicone, siloxane, vegetable oil, hydrocarbon, glass frit, and enamel. The weight ratio of the oil-permeable and water-proof film to the aggregates may be 0.2-15: 100.

The oil-permeable and water-proof film is preferably a film formed from oleophylic and hydrophobic resin, and the weight ratio of the oleophylic and hydrophobic resin to the aggregates may be 0.2-15: 100.

The oleophylic and hydrophobic resin may be any oleophylic and hydrophobic resin, preferably one or more of oleophylic and hydrophobic epoxy resin, oleophylic and hydrophobic phenolic resin, oleophylic and hydrophobic polyurethane resin, oleophylic and hydrophobic silicone resin, and polytetrafluoroethylene and polyvinylidene chloride.

Preferably, the oil-permeable and water-proof film is formed from at least two of oil-permeable and water-proof epoxy resin, oleophylic and hydrophobic phenolic resin, oleophylic and hydrophobic polyurethane resin, oleophylic and hydrophobic silicone resin, polytetrafluoroethylene, and polyvinylidene chloride, and the weight ratio between any two types of oleophylic and hydrophobic resin is 1: 0.1-10. With the preferred embodiment, the water volume can be further reduced, and the oil yield can be further increased.

The oleophylic and hydrophobic epoxy resin may be any ordinary oleophylic and hydrophobic epoxy resin, preferably one or more of glycidol ether epoxy resin, glycidol ester epoxy resin, glycidol amine epoxy resin, linear aliphatic epoxy resin, alicyclic epoxy resin, polysulfide rubber modified epoxy resin, polyamide resin modified epoxy resin, polyvinyl alcohol tert-butyral modified epoxy resin, Buna-N modified epoxy resin, phenolic resin modified epoxy resin, polyester resin modified epoxy resin, melamine urea-formaldehyde resin modified epoxy resin, furfural resin modified epoxy resin, ethylene resin modified epoxy resin, isocyanate modified epoxy resin, and silicone resin modified epoxy resin. The oleophylic and hydrophobic epoxy resin may be obtained commercially, or obtained with an ordinary preparation method.

The oleophylic and hydrophobic phenolic resin may be any ordinary oleophylic and hydrophobic phenolic resin, preferably one or more of xylene resin modified phenolic resin, epoxy resin modified phenolic resin, and organic silicon modified phenolic resin. The oleophylic and hydrophobic phenolic resin may be obtained commercially, or obtained with an ordinary preparation method.

The oleophylic and hydrophobic polyurethane resin may be any ordinary oleophylic and hydrophobic urethane resin, preferably prepared from organic polyisocyanate and one or more of oligomer polyols, such as polyether, and polyester, etc. The oleophylic and hydrophobic urethane resin may be obtained commercially, or obtained with an ordinary preparation method.

The oleophylic and hydrophobic silicone resin may be any ordinary oleophylic and hydrophobic silicone resin, wherein, the silicone resin is methyl trichlorosilane, dimethyl dichlorosilane, phenyl trichlorosilane, diphenyl dichlorosilane, or methyl phenyl dichlorosilane, or a mixture thereof. The oleophylic and hydrophobic silicone resin may be obtained commercially, or obtained with an ordinary preparation method. The oil-permeable and water-proof film may further contain a curing agent for the oleophylic and hydrophobic resin, to facilitate curing of the oleophylic and hydrophobic resin. The content of the curing agent may be a normal value; preferably, the weight ratio of the curing agent to the oleophylic and hydrophobic resin is 1-25: 100.

Different curing agents may be used, depending on the oleophylic and hydrophobic resin.

Preferably:
The curing agent for the oleophylic and hydrophobic epoxy resin is one or more of aliphatic amine, alicyclic amine, aromatic amine, and their modified compounds, polyamide, anhydride, tertiary amine, and their salts, paraformaldehyde, glyoxaline, high-polymer prepolymers, acyl peroxides, paraformaldehyde, and melamine resin; and/or

The curing agent for the oleophylic and hydrophobic phenolic resin is hexamethylenetetramine; and/or

The curing agent for the oleophylic and hydrophobic urethane resin is an addition product of toluene diisocyanate (TDI) and trimethylolpropane (TMP), a prepolymer of toluene diisocyanate (TDI) and hydroxyl-containing component, a single-component moisture curing agent, or a tripolymer of toluene diisocyanate (TDI). The hydroxyl-containing component may be one or more of dihydric alcohol, polyhydric alcohol, alcohol amine, aromatic diamine, and dicarboxylic acid (anhydride or ester).

The curing agent for the oleophylic and hydrophobic silicone resin is one or more of dibutyl tin dilaurate and N,N,N',N'-tetramethyl guanidine.

The oil-permeable and water-proof film may further contain a plasticizing agent, the weight ratio of the plasticizing agent to the oleophylic and hydrophobic resin is 5-25: 100, and the plasticizing agent is preferably one or more of phthalate, aliphatic dimethyl ester, and phosphate ester. The aliphatic dimethyl ester may be one or more of diethyleneglycol diformate, ethylene glycol diformate, and diethylene glycol diformate. The phosphate ester may be one or more of triaryl phosphate, cumenyl phenyl phosphate, and phenolic ether phosphate.

The oil-permeable and water-proof film may further contain a lubricating agent, the weight ratio of the lubricating agent to the resin may be 1-10: 100, and the lubricating agent is preferably one or more of polyethylene wax, oxidized polyethylene wax, stearic amide, calcium stearate, zinc stearate, and ethylene bis stearamide.

The degree of sphericity of the coated particles is preferably 0.7 or above. The "degree of sphericity" indicates how close particles are to spherical shape. The measuring method for "degree of sphericity" is well-known by those skilled in the art, for example, a plate method may be used.

The particle diameter of the coated particles is preferably 425 micrometers to 850 micrometers (20-40 meshes).

The siloxane may be siloxane based in R₂SiO constitutional units, where, R is alkyl, the number of carbon atoms in the alkyl may be 1-10, preferably 1-3. The siloxane is preferably polymethyl hydrogen siloxane and/or polydimethyl siloxane.

Preferably, the vegetable oil includes one or more of linseed oil, bean oil, maize oil, cotton-seed oil, and low-erucic acid rapeseed oil.

Preferably, the hydrocarbon comprises one or more of kerosene, diesel oil, crude oil, petroleum distillate, aliphatic solvent, solvent oil, and paraffin wax.

The coated particles disclosed in the present invention may be produced with a method comprising the following steps:
Step 1: heating the particles of aggregates to 50-400º°C;
Step 2: Adding the raw material of oil-permeable and water-proof film, and mixing well, to coat the raw material of oil-permeable and water-proof film on the particles of aggregates, so as to obtain coated particles.

Preferably, the method further comprises a step 3: cooling, crushing, and screening, to control the particle diameter of the hydrophobic particles. There is no special requirement for the cooling conditions; preferably, the coated particles are cooled to room temperature. Ordinary crushing and screening methods may be used.

Wherein, the heating temperature in step 1 is preferably 100-240°C.

In step 2, there is no special requirement for the duration of mixing, as long as the raw material attaches to the surfaces of the particles of aggregates uniformly. The duration of mixing is preferably 1~10 minutes.

The raw materials for the particles of aggregates and oil-permeable and water-proof film have been described in detail above, and therefore will not be detailed any more here.

Wherein, in step 2, one or more of curing agent, plasticizing agent, and lubricating agent may be added.

The amount and type of the curing agent, plasticizing agent, and lubricating agent have been described in detail in above text, and therefore will not be detailed any more here.

The present invention further provides an oil recovery method, which utilizes the coated particles disclosed in the present invention as the fracturing propping agent.

Based on the principle of increasing the surface tension of water while destroying the surface tension of oil, the coated particles are coated with an oil-permeable and water-proof film that comprises a resin material; therefore, on the surfaces of the coated particles, the surface tension of water is increased, and water remains in droplet state and is difficult to permeate through the fracturing propping agent. Hence, the coated particles and fracturing propping agent disclosed in the present invention are oil-permeable and water-proof under normal atmospheric pressure; in pressurized state, the resistance to oil permeation is significantly lower than the resistance to water permeation on the surfaces of the coated particles; therefore, the coated particles can effectively reduce the volume of water discharge and increase oil yield in the oil recovery industry.

Hereunder the present invention will be detailed in embodiments, with reference to the accompanying drawings; however, the present invention is not limited to the embodiments and drawings.

Hereunder the present invention will be further detailed in examples; however, it should be appreciated that the scope of the present invention is not limited to the examples.

### Examples

In the following examples, the quartz sand is purchased from Yongdeng Bluesky Quartz Sand Co., Ltd., and the ceramic aggregate is purchased from Shanxi Jianghe Tongda Petroleum Gas Project Material Co., Ltd.

The manufacturers and models of oleophylic and hydrophobic resin, curing agent, and plasticizing agent are as follows:
Polyamide resin modified epoxy resin: Fuqing King Brand Fine Chemicals Co., Ltd.
Polyvinyl alcohol tert-butyral modified epoxy resin: Shandong Shengquan Group Share-Holding Co., Ltd.
Xylene resin modified phenolic resin: Shandong Shengquan Group Share-Holding Co., Ltd.
Silicone resin: Dow Corning (USA).
Polyurethane resin: Shandong Shengquan Group Share-Holding Co., Ltd.
Polytetrafluoroethylene: Shanghai Qinairun Industry and Commerce Co., Ltd.
Polydimethyl siloxane: Dow Corning (USA).
Aliphatic amine curing agent: Jiangyin Tianxing Warm Material Co., Ltd.
Polyamide curing agent: Fuqing King Brand Fine Chemicals Co., Ltd.
Hexamethylenetetramine curing agent: Jiangyin Tianxing Warm Material Co., Ltd.
Dibutyl tin dilaurate: Shanghai Yuanji Chemical Co., Ltd.
TDI tripolymer: Shunde Bogao Paint Plant.
Phthalic ester plasticizing agent: Beijing Hengyie Zhongyuan Chemical Co., Ltd.
Polyethylene wax lubricating agent: Beijing Huada Tianrong New Materials and Technology Co., Ltd.

### Example 1 (Comparative)

Heat 3kg quartz sands having average particle diameter of 0.025mm to 250°C, load them into a sand mixing machine, and agitate; then, cool down to 200°C, add 0.15kg polyamide resin modified epoxy resin, agitate to coat the resin uniformly on the surfaces of the quartz sand particles; next, add aliphatic amine curing agent (at 2:100 weight ratio to resin) to cure the particles; finally, cool down the coated particles to room temperature, and crush them, to obtain the coated particles disclosed in the present invention.

### Example 2 (Comparative)

Prepare coated particles with the same method as that described in example 1, except that: add phthalic ester plasticizing agent at 10: 100 weight ratio to the resin and agitate before adding the curing agent.

### Example 3 (Comparative)

Prepare coated particles with the same method as that described in example 1, except that: add polyethylene wax lubricating agent at 2:100 weight ratio to the resin, and agitate to homogenous state, before the resin begins to cure and conglomerate.

### Example 4 (Comparative)

Prepare coated particles with the same method as that described in example 1, except that: the weight ratio of polyamide resin modified epoxy resin to quartz sand particles is 0.5:100.

### Example 5 (Comparative)

Prepare coated particles with the same method as that described in example 1, except that: the weight ratio of polyamide resin modified epoxy resin to quartz sand particles is 12:100.

### Example 6 (Comparative)

Heat 2kg quartz sand particles in 0.025mm average particle diameter to 400°C, add 0.04 kg polyvinyl alcohol tert-butyral modified epoxy resin, agitate, and add polyamide curing agent (at 5:100 weight ratio to the resin) to cure the resin, so as to form resin film on the quartz sand particles; next, cool down to room temperature, crush, and screen the coated particles, to obtain the coated particles disclosed in the present invention.

### Example 7 (Comparative)

Heat 5kg ceramic particles in 1.25mm average particle diameter to 100 °C, add 0.3kg xylene resin modified phenolic resin, and add hexamethylenetetramine curing agent (at 12:100 weight ratio to the resin) at the same time, agitate, to distribute the added phenolic resin and curing agent uniformly and form film on the quartz sand particles; next, cool down to room temperature, crush and screen the coated particles, to obtain the oil-permeable and water-proof coated particles disclosed in the present invention.

### Example 8 (Comparative)

Prepare coated particles with the same method as that described in example 1, except that: replace the polyamide resin modified epoxy resin with silicone resin, and replace the curing agent with dibutyl tin dilaurate.

### Example 9 (Comparative)

Prepare coated particles with the same method as that described in example 1, except that: replace the polyamide resin modified epoxy resin with polyurethane resin, and replace the curing agent with TDI tripolymer.

### Example 10 (Comparative)

Prepare coated particles with the same method as that described in example 1, except that: replace the polyamide resin modified epoxy resin with polytetrafluoroethylene, and no curing agent is used.

### Example 11 (Comparative)

Prepare coated particles with the same method as that described in example 1, except that: replace the polyamide resin modified epoxy resin with polydimethyl siloxane, and no curing agent is used.

### Example 12

Prepare coated particles with the same method as that described in example 1, except that: replace the 3kg polyamide resin modified epoxy resin with 2kg polyamide resin modified epoxy resin and 1kg polyvinyl alcohol tert-butyral modified epoxy resin.

### Example 13

Prepare coated particles with the same method as that described in example 1, except that: replace the polyamide resin modified epoxy resin with 0.5kg polyvinyl alcohol tert-butyral modified epoxy resin and 2.5kg xylene resin modified phenolic resin, and replace the curing agent with polyamide curing agent (at 5:100 weight ratio to the polyvinyl alcohol tert-butyral modified epoxy resin) and hexamethylenetetramine (at 5:100 weight ratio to the xylene resin modified phenolic resin).

### Example 14

Prepare coated particles with the same method as that described in example 1, except that: replace the polyamide resin modified epoxy resin with 0.5kg polyvinyl alcohol tert-butyral modified epoxy resin, 1.5kg xylene resin modified phenolic resin, and 1kg silicone resin, and replace the curing agent with polyamide curing agent (at 5: 100 weight ratio to the polyvinyl alcohol tert-butyral modified epoxy resin), hexamethylenetetramine (at 5: 100 weight ratio to the xylene resin modified phenolic resin), and dibutyl tin dilaurate (at 5: 100 weight ratio to the silicone resin).

### Example 15

Prepare coated particles with the same method as that described in example 1, except that: replace the polyamide resin modified epoxy resin with 1.5kg polyvinyl alcohol tert-butyral modified epoxy resin and 1.5kg polyurethane resin, and replace the curing agent with polyamide curing agent (at 5: 100 weight ratio to the polyvinyl alcohol tert-butyral modified epoxy resin) and TDI tripolymer (at 5: 100 weight ratio to the polyurethane resin).

The products obtained in the examples 1-15 have a degree of sphericity of 0.7 or higher, and the particle diameter of the obtained coated particles is 425 micrometers to 850 micrometers (20-40 meshes). Hereunder the oil-permeable and water-proof function of the coated quartz sand particles and the fracturing propping agent made of the coated quartz sand in the present invention will be proved with test data.

### 1. Test under normal atmospheric pressure

Take two sets of ordinary ceramic particles (not coated), ordinary quartz sand (not coated), and the coated quartz sand prepared in the examples 1~16 in the present invention in volume of 40mL each and load them into test tubes of the same size respectively, add 20mL water (colorless liquid) and kerosene (yellow liquid) into the test tubes respectively, and judge the oil/water permeability of the liquids by observing the permeation state in the liquids. The result is shown in Table 1.

**Table 1**

| Example No. | Water Level (ml) | Kerosene Level (ml) | Level Difference (ml) |
|---|---|---|---|
| 1 | 7 | 0 | 7 |
| 2 | 10 | 0 | 10 |
| 3 | 11 | 0 | 11 |
| 4 | 13 | 0 | 13 |
| 5 | 15 | 0 | 15 |
| 6 | 15 | 0 | 15 |
| 7 | 16 | 0 | 16 |
| 8 | 16 | 0 | 16 |
| 9 | 15 | 0 | 15 |
| 10 | 18 | 10 | 8 |
| 11 | 17 | 10 | 7 |
| 12 | 18 | 0 | 18 |
| 13 | 19 | 0 | 19 |
| 14 | 20 | 0 | 20 |
| 15 | 17 | 0 | 0 |
| Ordinary ceramic particles | 0 | 0 | 0 |
| Ordinary quartz sand | 0 | 0 | 0 |

It could be seen from Table 1: oil and water permeate quickly through ceramic particles and quartz sand; in contrast, they permeate much slower in the coated quartz sand according to the present invention and the permeated volume is much loss. The residual volume of water above the coated quartz sand is the greatest, and the water level is higher than the kerosene level by 7ml or more. Thus, it is proved that the coated quartz sand prepared in the present invention has poor hydrophilicity, and has water-retardant function in static state.

### 2. Test under high pressure

Weigh 50g coated quartz sand prepared in example 1, pour the coated quartz sand into the rubber packer of a core holding unit, apply 4.0MPa confining pressure, and displace clean water, oil and water, and kerosene at different flow rates, and record the displacement pressure values. After the pressure for oil and water displacement becomes stable, take 10ml effluent liquid, and record the volume ratio of oil to water. The result is shown in Table 2.

**Table 2**

| Displaced Fluid | Flow Rate (ml/min.) | Displacement Pressure (MPa) | Remarks |
|---|---|---|---|
| Water | 5 | 0.033 | / |
| | 10 | 0.052 | / |
| Oil and water | 5 | 0.025 | Volume ratio of oil to water: 6:4 |
| | 10 | 0.048 | Volume ratio of oil to water: 5.8:4.2 |
| Oil | 5 | 0.011 | / |
| | 10 | 0.023 | / |

It could be seen from Table 2: at the same flow rate, the pressure required for displacement of water is higher than the pressure required for displacement of oil; in addition, in the case of displacement of oil and water, the oil content in the obtained production fluid is apparently higher than the water content, which indicates the coated quartz sand prepared in example 1 has some water-retardant and oil-permeable effect.

### 3. Underground application

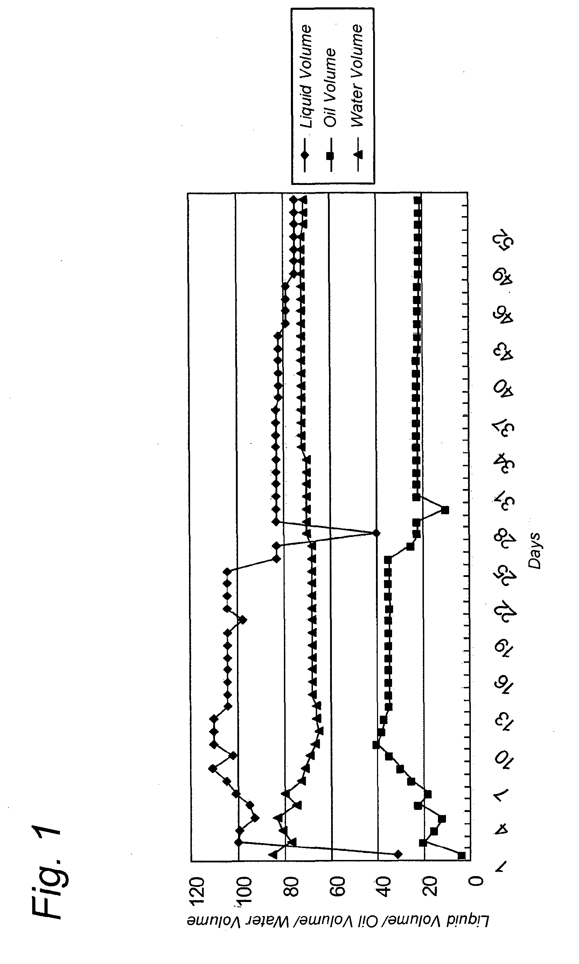

Test 1: Use the coated quartz sand prepared in example 1 as the fracturing propping agent to perform an underground test for 56 days; the result after fracturing is shown in Figure 1. In the produced liquid, the water content is reduced from 88% to 72.3%, i.e., reduced by 15%, while the oil content is increased from about 4 tons to 20 tons.

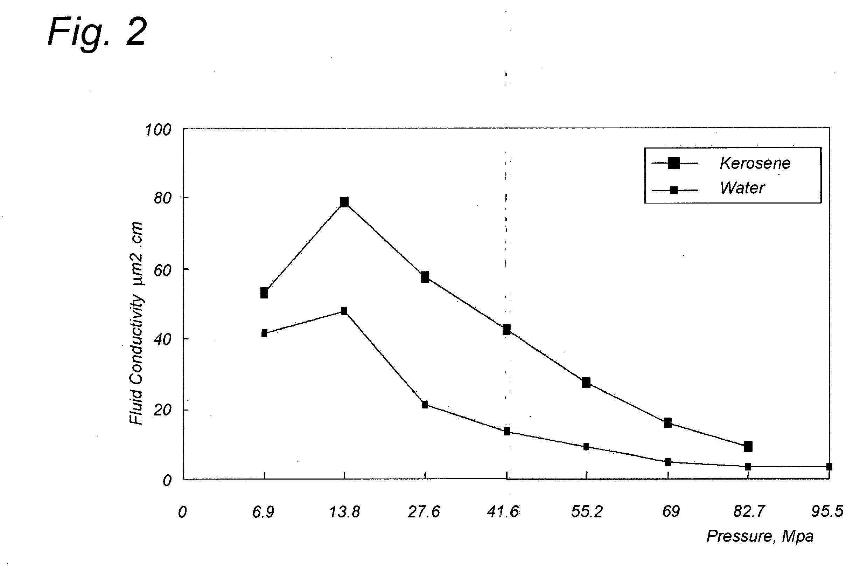

Test 2: Simulate water and kerosene media at 90°C formation temperature, and use the coated quartz sand prepared in example 1 as the fracturing propping agent to evaluate the flow conductivity. A curve of flow conductivity versus pressure is shown in Figure 2. It could be seen from Figure 2 that:
1) The fracturing propping agent disclosed in the present invention has much better flow conductivity in kerosene than in water, and the ratio is almost 3:1;
2) The fracturing propping agent disclosed in the present invention has lower flow resistance in kerosene that in water, which is favorable for suppression of water content increase.

Thus it can be seen: Based on the principle of increasing the surface tension of water and destroying the surface tension of oil, the coated particles disclosed in the present invention are coated with an oil-permeable and water-proof film, which comprises a resin material; when the coated quartz sand disclosed in the present invention is used as the fracturing propping agent in the oil recovery industry, the oil yield can be effectively increased, while the water discharge volume can be reduced greatly, since the coated quartz sand has oil-permeable and water-proof function; therefore, the coated particles in the present invention can increase oil yield and improve oil recovery efficiency, and has great economic and social benefits.

Of course, many other examples can be implemented on the basis of the present invention. Those skilled in the art can make various modifications and variations to the examples, without departing from the spirit of the present invention. However, these modifications and variations shall fall into the protected scope of the present invention as confined by the claims.

## Claims

1. A coated particle for oil recovery, comprising particle of aggregate, and an oil-permeable and water-proof film coated on the particle of aggregate, wherein the oil-permeable and water-proof film is a film formed from at least two oleophylic and hydrophobic resins of oil-permeable and water-proof epoxy resin, oleophylic and hydrophobic phenolic resin, oleophylic and hydrophobic polyurethane resin, oleophylic and hydrophobic silicone resin, polytetrafluoroethylene, and polyvinylidene chloride, the weight ratio between any two types of the oleophylic and hydrophobic resins is 1: 0.1-10, and the oleophylic and hydrophobic phenolic resin is one or more of xylene resin modified phenolic resin, epoxy resin modified phenolic resin, and organic silicon modified phenolic resin.

2. The coated particle according to claim 1, wherein the particle of aggregate is quartz sand particle or ceramic particle.

3. The coated particle according to claim 1 or claim 2, wherein the weight ratio of the oleophylic and hydrophobic resin to the aggregate is 0.2-15: 100.

4. The coated particle according to any one of the preceding claims, wherein:
the oleophylic and hydrophobic epoxy resin is one or more of glycidol ether epoxy resin, glycidol ester epoxy resin, glycidol amine epoxy resin, linear aliphatic epoxy resin, alicyclic epoxy resin, polysulfide rubber modified epoxy resin, polyamide resin modified epoxy resin, polyvinyl alcohol tert-butyral modified epoxy resin, Buna-N modified epoxy resin, phenolic resin modified epoxy resin, polyester resin modified epoxy resin, melamine urea-formaldehyde resin modified epoxy resin, furfural resin modified epoxy resin, ethylene resin modified epoxy resin, isocyanate modified epoxy resin, and silicone resin modified epoxy resin.

5. The coated particle according to any one of the preceding claims, wherein the oil-permeable and water-proof film further contains a curing agent for the oleophylic and hydrophobic resin, and the weight ratio of the curing agent to the oleophylic and hydrophobic resin is 1-25: 100.

6. The coated particle according to claim 5, wherein:
the curing agent for the oleophylic and hydrophobic epoxy resin is one or more of aliphatic amine, alicyclic amine, aromatic amine, polyamide, anhydride, tertiary amine, and their salts, paraformaldehyde, glyoxaline, acyl peroxides, paraformaldehyde, and melamine resin; and/or
the curing agent for the oleophylic and hydrophobic phenolic resin is hexamethylenetetramine; and/or
the curing agent for the oleophylic and hydrophobic urethane resin is one or more of an addition product of TDI and TMP, a prepolymer of TDI and a hydroxyl-containing component, a single-component moisture curing agent, and a TDI tripolymer; and/or
the curing agent for the oleophylic and hydrophobic silicone resin is one or more of dibutyl tin dilaurate and N,N,N',N'-tetramethyl guanidine.

7. The coated particle according to any one of the preceding claims, wherein the oil-permeable and water-proof film further contains a plasticizing agent, the weight ratio of the plasticizing agent to the oleophylic and hydrophobic resin is 5-25: 100, and the plasticizing agent is one or more of phthalate, aliphatic dimethyl ester, and phosphate ester.

8. The coated particle according to any one of the preceding claims, wherein the oil-permeable and water-proof film further contains a lubricating agent, the weight ratio of the lubricating agent to the resin is 1-10: 100, and the lubricating agent is one or more of polyethylene wax, oxidized polyethylene wax, stearic amide, calcium stearate, zinc stearate, and ethylene bis stearamide.

9. The coated particle according to any one of the preceding claims, wherein the degree of sphericity of the coated particle is 0.7 or above.

10. The coated particle according to any one of the preceding claims, wherein the particle diameter of the coated particle is 425 micrometers to 850 micrometers (20-40 meshes).

11. An oil recovery method, which utilizes the coated particle according to any one of claims 1 - 10 as the fracturing propping agent.

## Patentansprüche

1. Ein beschichtetes Partikel zur Ölgewinnung, umfassend ein Aggregatpartikel, und eine das Aggregatpartikel beschichtende Öl-durchlässige und wasserdichte Schicht, wobei die Öl-durchlässige und wasserdichte Schicht eine Schicht ist, die aus mindestens zwei oleophilen und hydrophoben Harzen aus der Gruppe Öldurchlässiges und wasserdichtes Epoxidharz, oleophiles und hydrophobes Phenolharz, oleophiles und hydrophobes Polyurethanharz, oleophiles und hydrophobes Silikonharz, Polytetrafluorethylen und Polyvinylidenchlorid besteht, wobei das Gewichtsverhältnis zwischen zwei Typen der oleophilen und hydrophoben Harze 1:0,1-10 beträgt, und wobei das oleophile und hydrophobe Phenolharz eins oder mehrere aus der Gruppe Xylenharz-modifiziertes Phenolharz, Epoxidharz-modifiziertes Phenolharz, und Siliziumorganischmodifiziertes Phenolharz ist.

2. Das beschichtete Partikel nach Anspruch 1, wobei das Aggregatpartikel Quarzsandpartikel oder Keramikpartikel ist.

3. Das beschichtete Partikel nach Anspruch 1 oder Anspruch 2, wobei das Gewichtsverhältnis des oleophilen and hydrophoben Harzes zum Aggregat 0,2-15:100 beträgt.

4. Das beschichtete Partikel nach einem der vorhergehenden Ansprüche, wobei das oleophile und hydrophobe Epoxidharz eins oder mehrere aus der Gruppe Glycidolether-Epoxidharz, Glycidolester-Epoxidharz, Glycidolamin-Epoxidharz, linear-aliphatisches Epoxidharz, alizyklisches Epoxidharz, Polysulfidgummimodifiziertes Epoxidharz, Polyamidharz-modifiziertes Epoxidharz, Polyvinylalkohol-Tert-Butyral-modifiziertes Epoxidharz, Buna-N-modifiziertes Epoxidharz, Phenolharz-modifiziertes Epoxidharz, Polyesterharz-modifiziertes Epoxidharz, Melamin-Urea-Formaldehydharz-modifiziertes Epoxidharz, Furfural-Harz-modifiziertes Epoxidharz, Ethylenharz-modifiziertes Epoxidharz, Isocyanatmodifiziertes Epoxidharz und Silikonharz-modifiziertes Epoxidharz ist.

5. Das beschichtete Partikel nach einem der vorhergehenden Ansprüche, wobei die Öl-durchlässige und wasserdichte Schicht weiterhin einen Härter für das oleophile und hydrophobe Harz enthält und wobei das Gewichtsverhältnis des Härters zum oleophilen und hydrophoben Harz 1-25:100 beträgt.

6. Das beschichtete Partikel nach Anspruch 5,
wobei der Härter für das oleophile und hydrophobe Epoxidharz eins oder mehrere aus der Gruppe aliphatische Amine, alizyklische Amine, aromatische Amine, Polyamide, Anhydride, tertiäre Amine, und deren Salze, Paraformaldehyde, Glyoxaline, Acylperoxide, Paraformaldehyde und Melaminharz ist; und/oder
wobei der Härter für das oleophile und hydrophobe Phenolharz Hexamethylentetramin ist; und/oder
wobei der Härter für das oleophile und hydrophobe Urethanharz eins oder mehrere aus der Gruppe Zusatzprodukt von TDI und TMP, ein Vorpolymer von TDI und eine Hydroxyl-enthaltende Komponente, ein einkomponentiger Feuchtigkeitshärter, und ein TDI Tripolymer ist; und/oder wobei der Härter für das oleophile und hydrophobe Silikonharz eins oder mehrere aus der Gruppe Dibutylzinndilaurat und N,N,N',N'-Tetramethylguanidin ist.

7. Das beschichtete Partikel nach einem der vorhergehenden Ansprüche, wobei die Öl-durchlässige und wasserdichte Schicht weiterhin einen Weichmacher enthält, wobei das Gewichtsverhältnis des Weichmachers zum oleophilen und hydrophoben Harz 5-25:100 ist, und wobei der Weichmacher eins oder mehrere aus der Gruppe Phthalate, aliphatische Dimethylester und Phosphatester ist.

8. Das beschichtete Partikel nach einem der vorhergehenden Ansprüche, wobei die Öl-durchlässige und wasserdichte Schicht weiterhin ein Schmiermittel enthält, wobei das Gewichtsverhältnis des Schmiermittels zum Harz 1-10:100 ist, und wobei das Schmiermittel eins oder mehrere aus der Gruppe Polyethylenwachs, oxidiertes Polyethylenwachs, Stearinamid, Kalziumstearat, Zinkstearat und Ethylen-bis-Stearamid ist.

9. Das beschichtete Partikel nach einem der vorhergehenden Ansprüche, wobei der Kugelförmigkeitsgrad des beschichteten Partikels 0,7 oder größer ist.

10. Das beschichtete Partikel nach einem der vorhergehenden Ansprüche, wobei der Partikeldurchmesser des beschichteten Partikels 425 µm bis 850 µm beträgt (20 - 40 Mesh).

11. Ein Ölgewinnungsverfahren, das ein beschichtetes Partikel nach einem der Ansprüche 1 bis 10 als das Fracking-Stützmittel verwendet.

## Revendications

1. Particule enrobée pour la récupération du pétrole, comprenant une particule d'agrégat, et un film perméable au pétrole et étanche à l'eau enrobé sur la particule d'agrégat, dans laquelle le film perméable au pétrole et étanche à l'eau est un film formé d'au moins deux résines oléophiles et hydrophobes parmi une résine époxy perméable au pétrole et étanche à l'eau, une résine phénolique oléophile et hydrophobe, une résine poly(uréthane) oléophile et hydrophobe, une résine silicone oléophile et hydrophobe, le poly(tétrafluoroéthylène), et le poly(chlorure de vinylidène), le rapport en poids entre deux types quelconques des résines oléophiles et hydrophobes est de 1 : 0,1 à 10, et la résine phénolique oléophile et hydrophobe est une ou plusieurs parmi une résine phénolique modifiée par résine xylène, une résine phénolique modifiée par résine époxy et une résine phénolique modifiée par silicium organique.

2. Particule enrobée selon la revendication 1, dans laquelle la particule d'agrégat est une particule de sable de quartz ou une particule de céramique.

3. Particule enrobée selon la revendication 1 ou la revendication 2, dans laquelle le rapport en poids entre la résine oléophile et hydrophobe et l'agrégat est de 0,2 à 15 : 100.

4. Particule enrobée selon l'une quelconque des revendications précédentes, dans laquelle :
la résine époxy oléophile et hydrophobe est une ou plusieurs parmi une résine époxy glycidol éther, une résine époxy glycidol ester, une résine époxy glycidol amine, une résine époxy aliphatique linéaire, une résine époxy alicyclique, une résine époxy modifiée par caoutchouc poly(sulfure), une résine époxy modifiée par résine poly(amide), une résine époxy modifiée par poly(tert-butyral d'alcool vinylique), une résine époxy modifiée par Buna-N, une résine époxy modifiée par résine phénolique, une résine époxy modifiée par résine poly(ester), une résine époxy modifiée par résine mélamine urée-formaldéhyde, une résine époxy modifiée par résine de furfural, une résine époxy modifiée par résine d'éthylène, une résine époxy modifiée par isocyanate et une résine époxy modifiée par résine silicone.

5. Particule enrobée selon l'une quelconque des revendications précédentes, dans laquelle le film perméable au pétrole et étanche à l'eau contient en outre un agent de durcissement pour la résine oléophile et hydrophobe, et le rapport en poids entre l'agent de durcissement et la résine oléophile et hydrophobe est de 1 à 25 : 100.

6. Particule enrobée selon la revendication 5, dans laquelle :
l'agent de durcissement pour la résine époxy oléophile et hydrophobe est un ou plusieurs parmi une amine aliphatique, une amine alicyclique, une amine aromatique, un poly(amide), un anhydride, une amine tertiaire, et leurs sels, le paraformaldéhyde, la glyoxaline, les peroxydes d'acyle, le paraformaldéhyde, et une résine mélamine ; et/ou
l'agent de durcissement pour la résine phénolique oléophile et hydrophobe est l'hexaméthylènetétramine ; et/ou
l'agent de durcissement pour la résine uréthane oléophile et hydrophobe est un ou plusieurs parmi un produit d'addition de TDI et TMP, un prépolymère de TDI et un composé contenant de l'hydroxyle, un agent de durcissement à l'humidité monocomposant, et un tripolymère de TDI ; et/ou
l'agent de durcissement pour la résine silicone oléophile et hydrophobe est un ou plusieurs parmi le dilaurate de dibutylétain et la N,N,N',N'-tétraméthylguanidine.

7. Particule enrobée selon l'une quelconque des revendications précédentes, dans laquelle le film perméable au pétrole et étanche à l'eau contient en outre un agent plastifiant, le rapport en poids entre l'agent plastifiant et la résine oléophile et hydrophobe est de 5 à 25 : 100, et l'agent plastifiant est un ou plusieurs parmi le phtalate, l'ester de diméthyle aliphatique et l'ester de phosphate.

8. Particule enrobée selon l'une quelconque des revendications précédentes, dans laquelle le film perméable au pétrole et étanche à l'eau contient en outre un agent lubrifiant, le rapport en poids entre l'agent lubrifiant et la résine est de 1 à 10 : 100, et l'agent lubrifiant est un ou plusieurs parmi la cire de poly(éthylène), la cire de poly(éthylène) oxydée, l'amide stéarique, le stéarate de calcium, le stéarate de zinc et l'éthylène bis-stéaramide.

9. Particule enrobée selon l'une quelconque des revendications précédentes, dans laquelle le degré de sphéricité de la particule enrobée est de 0,7 ou plus.

10. Particule enrobée selon l'une quelconque des revendications précédentes, dans laquelle le diamètre de particule de la particule enrobée est de 425 micromètres à 850 micromètres (20 à 40 mailles).

11. Procédé de récupération du pétrole, qui utilise la particule enrobée selon l'une quelconque des revendications 1 à 10 en tant qu'agent de soutènement en fracturation.
